(19) Europäisches Patentamt

European Patent Office

Office européen des brevets

(11) **EP 0 879 847 A1**

(12) **EUROPEAN PATENT APPLICATION**
published in accordance with Art. 158(3) EPC

(43) Date of publication:
**25.11.1998 Bulletin 1998/48**

(51) Int. Cl.$^6$: **C08K 9/06**, C08K 13/06,
C08L 9/00

(21) Application number: **97912524.2**

(22) Date of filing: **20.11.1997**

(86) International application number:
**PCT/JP97/04233**

(87) International publication number:
**WO 98/23677 (04.06.1998 Gazette 1998/22)**

(84) Designated Contracting States:
**DE FR IT**

(30) Priority: **26.11.1996 JP 314946/96**

(71) Applicant:
**THE YOKOHAMA RUBBER CO., LTD.
Tokyo, 105 (JP)**

(72) Inventors:
• **KAWAZURA, Tetsuji,
The Yokohama Rubber Co., Ltd
Hiratsuka-shi, Kanagawa 254 (JP)**

• **KAWAZOE, Masayuki,
The Yokohama Rubber Co., Ltd
Hiratsuka-shi, Kanagawa 254 (JP)**

(74) Representative:
**Hansen, Bernd, Dr. Dipl.-Chem. et al
Hoffmann Eitle,
Patent- und Rechtsanwälte,
Arabellastrasse 4
81925 München (DE)**

(54) **FILLER FOR REINFORCING RUBBERS AND RUBBER COMPOSITIONS CONTAINING THE SAME**

(57) A filler for rubber reinforcement comprising a filler having surfaces of particles formed by at least both carbon black and silica and having a compound having alkoxysilyl groups deposited on the surface of the filler.

**Description**

TECHNICAL FIELD

The present invention relates to a filler for rubber reinforcement and a rubber composition using the same, more particularly relates to a filler for rubber reinforcement comprising a filler having surfaces of particles formed by at least both carbon black and silica, and having a compound with alkoxysilyl groups previously deposited thereon and to a rubber composition, in which the filler is formulated, useful for a tire, a belt conveyor, a hose, a rubber vibration isolator, an industrial roll, etc.

BACKGROUND ART

Rubber compounds are, in most cases, used for applications subjected to repeated deformation. However, if the $\tan\delta$ in a high temperature region (for example, 60°C) of the rubber compound is high, the heat generated during the use thereof etc. will be high and will lead to early destruction. Therefore, there is being a demand to reduce the $\tan\delta$ in the high temperature region while maintaining other performance characteristics.

As one example, in a compound for a tire, an improvement in fuel consumption, durability, etc. requires reduction of the $\tan\delta$ in the high temperature region (40°C to 100°C), particularly at 60°C as a typical value. However, generally, the braking performance (for example, wet grip), which is a characteristic contradictory to this, etc. will fall as a result, and therefore, it is necessary to maintain these characteristics.

As such a prior art, for example, Japanese Unexamined Patent Publication (Kokai) No. 3-239737 proposes the formulation of a silica filler in a solution polymerized SBR or in a rubber blend thereof with a diene rubber. Further, Japanese Unexamined Patent Publication (Kokai) No. 3-252431 proposes the formulation of a silica filler and a silane coupling agent in a solution polymerized SBR or in a rubber blend thereof with a diene rubber. Further, Japanese Unexamined Patent Publication (Kokai) No. 3-253433 proposes the formulation of a silica filler and a silane coupling agent in a silane-terminated solution polymerized BR or SBR.

However, according to the above proposals, although it is possible to reduce the $\tan\delta$ in a high temperature region without causing a reduction in the characteristics such as the braking performance, there is the problem that the silica filler has a high self-agglomeration property, so is not easy to disperse and therefore the processability is poor. Further, since a silica filler is nonconductive, if it is used alone for a tire, in particular in a tire tread compound, without using a sufficient amount of carbon black together, the flow of static electricity to the road surface becomes insufficient and, as a result, electrostatic breakdown occurs causing a discharge which in turn causes noise on electronic equipments such as the radio and sometimes even causes malfunctions.

Even when used for belt conveyors, hoses, etc. in the same way as above, there is an accompanying danger of the static electricity igniting combustible matter.

For the purpose of solving the above problems, the present inventors engaged in intensive studies and, as a result thereof, previously proposed a filler for rubber reinforcement having both a carbon black and silica surface obtained by depositing silica on the carbon black (Japanese Unexamined Patent Publication (Kokai) No. 8-277347). According to this proposal, it is possible to eliminate the defects of silica, that is, the problem of the high electrical resistance and the problem of the poor processability. However, in this proposal, the $\tan\delta$ in the high temperature region sometimes does not sufficiently reduced when the amount of process oil formulated is large.

On the other hand, U.S. Patent No. 5,159,009 (or Japanese Unexamined Patent Publication (Kokai) No. 4-233976) discloses a filler for rubber reinforcement obtained by reacting an organic silicic acid compound having a silanol group with the surface of the carbon black. However, there are no references at all therein to deposit a compound having alkoxysilyl groups on a filer for rubber reinforcement, of which surface is formed from both carbon black and silica as in the present invention. Accordingly, this should be distinguished from the present invention.

DISCLOSURE OF THE INVENTION

Therefore, the objects of the present invention are to provide a filler for rubber reinforcement which, when formulated in various rubber products, makes the $\tan\delta$ in the high temperature region relatively low whereby the durability is improved, and the problems of the low electrical conductivity and the processability, that is, the difficulty of dispersion of the silica, are solved and also to provide a rubber composition using the same. In particular, the object of the present invention is to provide a rubber composition which, when used as a compound for a tire, does not cause a reduction in the tire performance characteristics, such as the braking performance, has a low fuel consumption and superior durability (low $\tan\delta$ in a high temperature region), and does not suffer from a poor balance between the braking performance and the fuel consumption when a large amount of process oil is formulated, in particular, is suited for use for a tire tread, under tread, and side tread.

According to the present invention, there is provided a filler for rubber reinforcement characterized by comprising a filler having a compound with an alkoxysilyl group deposited thereon and having surfaces of particles formed by at least both carbon black and silica.

Further, according to the present invention, there is provided a rubber composition characterized by comprising 100 parts by weight of at least one rubber component containing a diene component and 10 to 200 parts by weight of the above-mentioned filler for rubber reinforcement formulated therein.

Further, according to the present invention, there is provided a rubber composition for tires for use in the tire tread, the under tread, and the side tread.

BEST MODE FOR CARRYING OUT THE INVENTION

In the present invention, a surface-treated filler comprised of a filler having a compound having an alkoxysilyl group deposited thereon and having a surface formed by carbon black and silica is formulated in a rubber component including a diene rubber (a plurality of rubber components is also acceptable), whereby the fuel consumption and durability (low $\tan\delta$ at a high temperature region) can be improved without lowering tire performance characteristics such as the braking performance, the problem of the high electrical resistance occurred in silica formulations can be solved, and, further, the balance between the braking performance and the low fuel consumption performance will not be adversely affected even when a large amount of oil is formulated.

This can be easily achieved, as in the present invention, by using a filler for rubber reinforcement comprised of a filler having a compound with an alkoxysilyl group capable of reacting with a silanol group on the surface of the silica, deposited on the surface of the filler and having the surface of particles formed by both carbon black and silica.

The compound having an alkoxysilyl group effectively usable for the filler for rubber reinforcement of the present invention may include a polysiloxane having a number average molecular weight of 200 to 100,000 and containing an alkoxysilyl group having the following formula:

$$\equiv Si\text{-}OR \tag{1}$$

wherein R is a $C_1$ to $C_{18}$ substituted or unsubstituted monovalent hydrocarbon group or an organic group containing an ether bond.

Further, the compound having an alkoxysilyl group, may include silane coupling agents normally used for rubber compositions together with silica. As the silane coupling agents, the silane coupling agents shown in the following Table I may be exemplified.

## Table I

| Name of compound | Structural formula |
|---|---|
| Vinyltrimethoxysilane | $CH_2=CHSi(OCH_3)_3$ |
| Vinyltriethoxysilane | $CH_2=CHSi(OCH_2CH_3)_3$ |
| Vinyltris(2-methoxyethoxy)silane | $CH_2=CHSi(OCH_2CH_2OCH_3)_3$ |
| N-(2-aminoethyl)3-aminopropylmethyldimethoxy silane | $H_2NCH_2CH_2NH(CH_2)_3Si(OCH_3)_2$ with $CH_3$ |
| N-(2-aminoethyl)3-aminopropyltrimethoxysilane | $H_2NCH_2CH_2NH(CH_2)_3Si(OCH_3)_3$ |
| 3-aminopropyltrimethoxysilane | $H_2N(CH_2)_3Si(OCH_3)_3$ |
| 3-glycidoxypropyltrimethoxy silane | $\underset{O}{CH_2-CHCH_2}O(CH_2)_3Si(OCH_3)_3$ |
| 3-glycidoxypropylmethyldi methoxysilane | $\underset{O}{CH_2-CHCH_2}O(CH_2)_3Si(OCH_3)_2$ with $CH_3$ |
| 2-(3,4-epoxycyclohexyl) ethyltrimethoxysilane | $O$ (epoxycyclohexyl)—$CH_2CH_2Si(OCH_3)_3$ |
| 3-methacryloxypropyltri methoxysilane | $CH_2=CCO_2(CH_2)_3Si(OCH_3)_3$ with $CH_3$ |
| 3-mercaptopropyltrimethoxy silane | $HS(CH_2)_3Si(OCH_3)_3$ |
| 3-aminopropyltriethoxysilane | $H_2N(CH_2)_3Si(OCH_2CH_3)_3$ |
| bis-[3-(triethoxysilyl)-propyl]tetrasulfide | $[(CH_3CH_2O)_3Si(CH_2)_3]_2S_4$ |
| 3-trimethoxysilylpropyl-N,N-dimethylthiocarbamoyl-tetrasulfide | $(CH_3O)_3SiC_3H_6S_4CN\begin{smallmatrix}CH_3\\CH_3\end{smallmatrix}$ with $\underset{S}{\|}$ |
| Trimethoxysilylpropyl-mercaptobenzothiazole tetrasulfide | $(CH_3O)_3SiC_3H_6S_4$—(benzothiazole N, S ring) |
| Triethoxysilylpropyl-methacrylate-monosulfide | $(C_2H_5O)_3SiC_3H_6SC\overset{CH_3}{\underset{\underset{O}{\|}}{C}}-CH_3$ |
| Dimethoxymethylsilylpropyl-N,N-dimethylthiocarbamoyl-tetrasulfide | $(CH_3O)_2SiC_3H_6S_4CN\begin{smallmatrix}CH_3\\CH_3\end{smallmatrix}$ with $CH_3$ and $\underset{S}{\|}$ |

The filler for rubber reinforcement used in the present invention is not particularly limited to the manufacturing method thereof, but, for example, can be produced by dispersing a predetermined amount of carbon black in water to form a slurry, adjusting a pH of the slurry to 6 or more, preferably 10 to 11, and, while maintaining the temperature at 70°C or more, preferably 85 to 95°C, for example, sodium silicate is used to deposit or precipitate amorphous silica on the surface of the particles of the carbon black, then a predetermined amount of an alcohol solution of a compound having an alkoxysilyl group, is added thereto, while stirring, whereby the compound having the alkoxysilyl group is deposited or precipitated.

The entire amount of the silica and the compound having an alkoxysilyl group in the filler for rubber produced by the above method does not have to be physically or chemically bonded to the surface of the carbon black, but according to the observation by a transmission type electron microscope (about 600,000X), it was confirmed that there was silica deposited on the surface of the particles of the carbon black. Further, quantitative analysis of the silicon confirms the amount of silica and the content of the compound having the alkoxysilyl groups.

The filler for rubber reinforcement used in the present invention has, per 100 wt% of the carbon black, 0.1 to 50 wt%, preferably 0.3 to 30 wt%, of silica deposited thereon and 0.1 to 10 wt%, preferably 0.3 to 8 wt%, of the compound having an alkoxysilyl group deposited thereon. If the amount of the silica deposited is too small, it is not preferable that the balance between the tan$\delta$ in the high temperature region (40°C to 100°C) and the tan$\delta$ in the low temperature region (near 0°C) is not improved, contrary to this, if the amount is too large, it is not preferable that the electroconductivity is decreased and the agglomeration force of the filler becomes strong so that dispersion at the time of kneading becomes insufficient. Further, if the amount of deposition of the compound having the alkoxysilyl group is too small, the effect of improvement in the tan$\delta$ of the rubber compounding having a large amount of oil, in particular, becomes insufficient, while if too large, the effect is not exhibited and the result is uneconomical.

The rubber component formulated in the rubber composition according to the present invention is at least one rubber component alone, or mixtures of two types or more, containing a cross-linkable diene component.

As the rubber containing the cross-linkable diene component, any rubber may be used. For example, natural rubber (NR), various butadiene rubbers (BR), various styrene-butadiene copolymer rubbers (SBR), polyisoprene rubber (IR), butyl rubber (IIR), acrylonitrile butadiene rubber, chloroprene rubber, ethylene-propylene copolymer rubber, ethylene-propylene-diene copolymer rubber, styrene-isoprene copolymer rubber, styrene-isoprene-butadiene copolymer rubber, isoprene-butadiene copolymer rubber, etc may be used. When using a blend of the rubbers, the ratio of the blend is not particularly limited.

According to the present invention, the above filler for rubber reinforcement is preferably added in an amount of 10 to 200 parts by weight based on 100 parts by weight of the rubber component. If the amount formulated is too small, the desired effect cannot be obtained, whereas, if the amount is too large, the hardness becomes too high and the procesability falls so that the practicality as a rubber material may become poor.

The rubber composition according to the present invention may include, in addition to the above filler for rubber reinforcement, any carbon black and/or silica and/or silane coupling agent normally formulated into rubber compositions.

The amount of the carbon black and/or silica formulated in such a case must not exceed 10 times the weight of the surface-treated filler for rubber reinforcement, preferably not more than 8 times. If the amount of the carbon black formulated is too large, the desired effect cannot be obtained.

In a preferable embodiment of the rubber composition of the present invention, the rubber composition is provided for use for tire treads, under treads, and side treads.

The rubber which can be formulated as a rubber component is, for example, one or more types of diene rubbers selected from the group consisting of natural rubber (NR), polyisoprene rubber (IR), styrene-butadiene copolymer rubber (SBR), polybutadiene rubber (BR), butyl rubber (IIR), acrylonitrile butadiene rubber (NBR), 1,2-syndiotactic polybutadiene polymer, and NR or BR containing micro monofilaments (nylon etc.)

The rubber composition of the present invention for a tire tread, under tread, and side tread contains therein, as a filler, based on 100 parts by weight of the rubber component, a filler comprised of at least 10 parts by weight, preferably 20 to 100 parts by weight, of the above filler for rubber reinforcement and 90 to 0 parts by weight, preferably 80 to 0 parts by weight of carbon black, in an amount of 30 to 150 parts by weight, preferably 40 to 120 parts by weight, in the case of tire tread use, in an amount of 30 to 120 parts by weight, preferably 40 to 100 parts by weight, in the case of under tread use, and in an amount of 30 to 100 parts by weight, preferably 40 to 90 parts by weight, in the case of side tread use. If the amounts of the fillers are too small, the tensile strength etc. of the rubber composition is unpreferably decreased, while conversely if it is too large, it is unpreferable that the hardness and the heat generated due to the deformation are increased too much and exceed the practical range and the viscosity of the unvulcanized rubber composition is unpreferably increased. Note that the content of the silica in the filler for rubber reinforcement is in all cases 0.1 to 50 wt%, preferably 0.3 to 30 wt%, based on the weight of the filler. If the amount of the silica deposited is too small, the balance between the tan$\delta$ at a high temperature region (40°C to 100°C) and the tan$\delta$ at a low temperature region (near 0°C) is not improved and conversely if it is too large, it is not preferable that the electroconductivity falls and that the agglomeration force of the filler becomes strong and therefore dispersion during kneading becomes insufficient.

The carbon black having the silica and the compound with the alkoxysilyl group deposited on the surface thereof in the present invention preferably have a specific surface area by nitrogen adsorption (measured according to ASTM D3037) of 90 to 250 $m^2$/g, more preferably 90 to 200 $m^2$/g, and a DBP oil absorption (measured according to JIS K 6221) of 90 to 180 ml/100 g, in the case of use for a tire tread and use for an under tread. If the value of the specific surface area by nitrogen adsorption is too low, the abrasion resistance, tensile strength, etc. become unpreferably low, while conversely if it is too high, the dispersion during kneading of the rubber becomes unpreferably difficult.

On the other hand, in the case of a rubber composition for a side tread, the carbon black having the silica and the compound with the alkoxysilyl group deposited on the surface thereof preferably have a specific surface area by nitrogen adsorption of 30 to 120 $m^2$/g, more preferably 35 to 120 $m^2$/g, and a DBP oil absorption of 90 to 180 ml/100 g. If these values are too low, the tensile strength, modulus, etc. also become unpreferably low, while conversely if it is too high, in the case of the specific surface area by nitrogen adsorption, the heat generation becomes large, while, in the case of the DBP oil absorption, the manufacture as carbon becomes unpreferably difficult.

The other general properties of the carbon black formulated in the rubber compositions for tire treads, under treads, and side treads in the preferred embodiments of the present invention are not particularly limited, but the preferable carbon blacks are those which are normally used for rubber formulations and are an FEF to SAF grade carbon black as a particle size grade. Further, in some cases, a carbon black for color use may be used. These may also be blended together.

According to a preferable embodiment of the present invention, the above rubber composition for tire may further contain a silane coupling agent therein in an amount of 1 to 10 wt% based on the weight of the filler for rubber reinforcement. Even if the amount of the silane coupling agent added exceeds 10 wt%, not only is there no particular improvement in the physical properties, but also it is unpreferable because the cost rises, the scorch time is shortened, etc. As the silane coupling agent which may be used in the preferable embodiment of the present invention, it is possible to formulate any silane coupling agent which has been conventionally used together with a silica filler in a rubber composition. Examples of such silane coupling agents are as follows: vinyltrichorosilane, vinyltrimethoxysilane, vinyltriethoxysilane, vinyltris(β-methoxyethoxy) silane, β-(3,4-epoxycyclohexyl)ethyltrimethoxysilane, γ-glycidoxypropyltrimethoxysilane, γ-glycidoxypropylmethyldiethoxysilane, γ-glycidoxypropyltriethoxy-silane, γ-metacryloxypropylmethyldimethoxysilane, γ-methacryloxypropyltrimethoxysilane, γ-methacryloxypropylmethyldiethoxysilane, γ-methacryloxypropyltriethoxysilane, N-β(aminoethyl)γ-aminopropylmethyldimethoxysilane, N-β(aminoethyl)γ-aminopropyltrimethoxysilane, N-β(aminoethyl)γ-aminopropyltriethoxysilane, γ-aminopropyltrimethoxysilane, γ-aminopropyltriethoxysilane, N-phenyl-γ-aminopropyltrimethoxysilane, γ-chloropropyltrimethoxysilane, γ-mercaptopropyltrimethoxysilane, bis-(3-[triethoxysilyl]-propyl)-tetrasulfide.

The rubber composition of the present invention may suitably contains, in addition to the above starting rubber, filler for rubber reinforcement, and an optional any silane coupling agent, any compounding agents normally used in the rubber industry, for example, carbon black, silica, sulfur, organic peroxide, a softening agent, an antioxidant, a vulcanization accelerator, a filler, a plasticizer, etc., if desired, in an amount normally used.

Examples

The present invention will now be explained by Examples, but the present invention is of course not limited to these Examples.

The reinforcing fillers 1 to 3 used for the formulations of the following Examples and Comparative Examples were prepared by the following methods:

Reinforcing Filler 1

15 liters of water was added to 800 g of carbon black to obtain a slurry. While holding the slurry at 90°C and pH 10, a 2.5 wt% solution of water-glass (JIS No. 1) was gradually added dropwise to give an amount of exactly 8 g as silica. At the same time, an aqueous solution of sulfuric acid was suitably added dropwise to maintain the pH of the system.

When the addition of the water-glass solution was completed, the slurry was stirred for about 1 hour while maintaining the temperature and pH, then the pH of the system was adjusted to 7.

Next, the slurry was filtered, washed, and dried.

The content of the silica in the reinforcing filler obtained was 1.1 wt% as a result of analysis of the ash.

Reinforcing Filler 2

15 liters of water was added to 800 g of carbon black to obtain a slurry. While holding the slurry at 90°C and pH 10, a 2.5 wt% solution of water-glass (JIS No. 1) was gradually added dropwise to give an amount of exactly 8 g as silica. At the same time, an aqueous solution of sulfuric acid was suitably added dropwise to maintain the pH of the system.

When the addition of the water-glass solution was completed, the slurry was stirred for about 1 hour while maintaining the temperature and pH, then the pH of the system was adjusted to 7.

Next, an alcohol solution of a silane coupling agent (Si69: made by Degussa) was added to give an amount of 24 g of the silane coupling agent and the slurry was stirred for about 30 minutes.

Next, the slurry was filtered, washed, and dried.

The content of the silica in the reinforcing filler obtained (before addition of a silane coupling agent) was 1.1 wt% as a result of analysis of the ash. Further, analysis of the content of sulfur showed that the content of the silane coupling agent was 2.2 wt%.

Reinforcing Filler 3

15 liters of water was added to 800 g of carbon black to obtain a slurry. While holding the slurry at 90°C and pH 10, a 2.5 wt% solution of water-glass (JIS No. 1) was gradually added dropwise to give an amount of exactly 80 g as silica. At the same time, an aqueous solution of sulfuric acid was suitably added dropwise to maintain the pH of the system.

When the addition of the water-glass solution was completed, the slurry was stirred for about 1 hour while maintaining the temperature and pH, then the pH of the system was adjusted to 7.

Next, an alcohol solution of a silane coupling agent (Si69: made by Degussa) was added to give an amount of 24 g of the silane coupling agent and the slurry was stirred for about 30 minutes.

Next, the slurry was filtered, washed, and dried.

The content of the silica in the reinforcing filler obtained (before addition of a silane coupling agent) was 9.7 wt% as a result of analysis of the ash. Further, analysis of the content of sulfur showed that the content of the silane coupling agent was 2.8 wt%.

Preparation of Samples

Various rubber compositions were prepared, according to an ordinary method, by mixing and kneading the formulations shown in the following Table II (wt%) by a Banbury mixer and a roll mill. These rubber compositions were vulcanized by pressing at 160°C for 20 minutes to prepare the desired test pieces which were then subjected to various tests to measure their physical properties.

The test methods used in the Comparative Examples and the Examples were as follows:

(1) tanδ (0°C and 60°C)

This was measured using a viscoelasticity spectrometer (made by Toyo Seiki) under conditions of a temperature of 0°C and 60°C, an initial stress of 10 percent, a dynamic stress of ±2 percent, and a frequency of 20 Hz.

In the above vulcanized physical properties, the higher the tanδ at 0°C, the greater the frictional force at a wet road surface (the higher the grip of the tire). Also, the lower the tanδ at 60°C, the smaller the energy loss in the low energy deformation (the smaller the rolling resistance of the tire) (low fuel consumption).

(2) Abrasion Resistance (Lambourn Abrasion)

The amount of loss due to abrasion was measured using a Lambourn abrasion tester (made by Iwamoto Seisakusho) under conditions of a temperature of 20°C and a slip of 50 percent and was indexed against Comparative Examples 1 and 4.

The larger the value, the better the abrasion resistance shown.

(3) Electrical Resistance

This was measured according to JIS K 6911.

Examples 1 to 8 and Comparative Examples 1 to 6

These Examples show the results of evaluation in the Examples of use of the reinforcing fillers 1 to 3 in SBR rubber compositions. The formulations and results are shown in Table II.

Note that (Comparative Example 3) shows the results in the case of a rubber composition containing the reinforcing filler 1 comprised of "carbon black with silica deposited on its surface" according to a previous co-pending application of the present inventors (Japanese Patent Application No. 7-18159). This is shown to clarify the difference in effect with the case of use of the reinforcing fillers 2 and 3 of the present invention.

## Table II

| | Comp. Ex. 1 | Comp. Ex. 2 | Comp. Ex. 3 | Ex. 1 | Ex. 2 | Ex. 3 | Ex. 4 |
|---|---|---|---|---|---|---|---|
| **Formulation** | | | | | | | |
| SBR1502 *1 | 100 | 100 | 100 | 100 | 100 | 100 | 100 |
| Carbon black *2 | 50 | | | | | | |
| Silica *3 | | 50 | | | | | |
| Reinforcing filler 1 | | | 50 | | | | |
| Reinforcing filler 2 | | | | 50 | | 50 | 50 |
| Reinforcing filler 3 | | | | | 50 | | |
| Silane coupling agent *4 | | 4 | 2 | 2 | 2 | | 1 |
| Diethylene glycol | | 2 | | | | | |
| Zinc white | 3 | 3 | 3 | 3 | 3 | 3 | 3 |
| Stearic acid | 2 | 2 | 2 | 2 | 2 | 2 | 2 |
| Antioxidant 6C *5 | 2 | 2 | 2 | 2 | 2 | 2 | 2 |
| Wax | 1 | 1 | 1 | 1 | 1 | 1 | 1 |
| Sulfur | 2 | 2 | 2 | 2 | 2 | 2 | 2 |
| Vulcanization accelerator NS *6 | 1 | 1 | 1 | 1 | 1 | 1 | 1 |
| **Physical properties** | | | | | | | |
| Wet road surface resistance (tanδ 0°C) | 0.312 | 0.308 | 0.296 | 0.303 | 0.310 | 0.315 | 0.311 |
| Low fuel consumption (tanδ 60°C) | 0.187 | 0.155 | 0.148 | 0.145 | 0.153 | 0.170 | 0.166 |
| Abrasion resistance | 100 | 93 | 98 | 97 | 99 | 102 | 100 |
| Electrical resistance (Ω·cm) | $1.0 \times 10^2$ | $1.0 \times 10^{14}$ | $1.0 \times 10^5$ | $1.0 \times 10^5$ | $9.0 \times 10^4$ | $1.0 \times 10^5$ | $9.0 \times 10^4$ |

Notes: 1) Nipol 1502 made by Nippon Zeon.
2) Seast KH made by Tokai Carbon.
3) Nipsil AQ made by Japan Silica Industry.
4) Si69 made by Degussa.
5) Nocrac 6C made by Ouchi Shinko Chemical Industry.
6) Sanceler NS made by Sanshin Kagaku Kogyo.
7) Nipol 1712 made by Nippon Zeon extended with 37.5 parts by weight aromatic oil.
8) Nocceler CZ made by Ouchi Shinko Chemical Industry.
9) Nocceler D made by Ouchi Shinko Chemical Industry.

Table II (Continued)

| Formulation | Comp. Ex. 4 | Comp. Ex. 5 | Comp. Ex. 6 | Ex. 5 | Ex. 6 | Ex. 7 | Ex. 8 |
|---|---|---|---|---|---|---|---|
| SBR1712 *7 | 137.5 | 137.5 | 137.5 | 137.5 | 137.5 | 137.5 | 137.5 |
| Carbon black *2 | 75 | | | | | | |
| Silica *3 | | 75 | | | | | |
| Reinforcing filler 1 | | | 75 | | | | |
| Reinforcing filler 2 | | | | 75 | 75 | 75 | 75 |
| Reinforcing filler 3 | | | | | | | |
| Silane coupling agent *4 | | 6 | 3 | 3 | 3 | 3 | 1.5 |
| Diethylene glycol | | 3 | | | | | |
| Zinc white | 3 | 3 | 3 | 3 | 3 | 3 | 3 |
| Stearic acid | 2 | 2 | 2 | 2 | 2 | 2 | 2 |
| Antioxidant 6C *5 | 2 | 2 | 2 | 2 | 2 | 2 | 2 |
| Wax | 1 | 1 | 1 | 1 | 1 | 1 | 1 |
| Sulfur | 2 | 2 | 2 | 2 | 2 | 2 | 2 |
| Vulcanization accelerator CZ *8 | 1.5 | 1.5 | 1.5 | 1.5 | 1.5 | 1.5 | 1.5 |
| Vulcanization accelerator DPG *9 | 0.5 | 1.2 | 0.5 | 0.5 | 0.5 | 0.5 | 0.5 |
| **Physical properties** | | | | | | | |
| Wet road surface resistance (tanδ 0°C) | 0.488 | 0.451 | 0.450 | 0.495 | 0.491 | 0.483 | 0.488 |
| Low fuel consumption (tanδ 60°C) | 0.280 | 0.199 | 0.242 | 0.200 | 0.233 | 0.243 | 0.222 |
| Abrasion resistance | 100 | 95 | 98 | 97 | 98 | 103 | 101 |
| Electrical resistance (Ω·cm) | $7.9 \times 10^5$ | $2.5 \times 10^{13}$ | $6.3 \times 10^5$ | $4.6 \times 10^5$ | $5.4 \times 10^5$ | $7.1 \times 10^5$ | $6.1 \times 10^5$ |

Notes: 1) Nipol 1502 made by Nippon Zeon.
2) Seast KH made by Tokai Carbon.
3) Nipsil AQ made by Japan Silica Industry.
4) Si69 made by Degussa.
5) Nocrac 6C made by Ouchi Shinko Chemical Industry.
6) Sanceler NS made by Sanshin Kagaku Kogyo.
7) Nipol 1712 made by Nippon Zeon extended with 37.5 parts by weight aroma oil.
8) Nocceler CZ made by Ouchi Shinko Chemical Industry.
9) Nocceler D made by Ouchi Shinko Chemical Industry.

As is clear from the results shown in Table II, when formulating the filler for rubber reinforcement of the present invention (Examples 1 to 8), compared with when formulating only the carbon black (Comparative Examples 1 and 4) and when formulating only the silica (Comparative Examples 2 and 5), the characteristics of the wet road surface resistance, the fuel consumption, the abrasion resistance, and the electrical resistance are improved in good balance and the desired effects are achieved. Further, even when compared with the case of formulating carbon black and a silica bond type reinforcing filler 1 (Comparative Examples 3 and 6), the present invention is better in terms of the wet road surface resistance. It is more superior in terms of the fuel consumption and is no different than the prior art in terms of the abrasion resistance and electrical resistance in the case of the oil extended rubber composition (Examples 5 to 8).

INDUSTRIAL APPLICABILITY

The rubber composition containing the filler for rubber reinforcement according to the present invention is superior in the balance between the braking performance and the fuel consumption and is free from the problems derived from a high electrical resistance as with silica fillers. Further, it is free from deterioration of the balance between the braking performance and the fuel consumption even when a large amount of process oil is formulated. Accordingly, the rubber composition according to the present invention can be effectively used as rubber compositions for various types of tires, rubber compositions for belt conveyors, rubber compositions for hose, rubber vibration insulator compositions, and rubber compositions for industrial rolls.

**Claims**

1. A filler for rubber reinforcement characterized by comprising a filler having a compound with an alkoxysilyl group deposited thereon, said filler having surfaces of particles formed by at least both carbon black and silica.

2. A filler for rubber reinforcement as set forth in claim 1, wherein the amount of silica deposited on the filler having surfaces of particles formed by at least both carbon black and silica is in the range of 0.1 to 50 wt%.

3. A filler for rubber reinforcement as set forth in claim 1 or 2, wherein the amount of the compound having the alkoxysilyl group deposited is in the range of 0.1 to 10 wt%.

4. A filler for rubber reinforcement as set forth in any one of claims 1 to 3, wherein the compound having the alkoxysilyl group is at least one silane coupling agent.

5. A rubber composition characterized by comprising 100 parts by weight of at least one rubber component containing a diene component in which 10 to 200 parts by weight of a filler for rubber reinforcement according to any one of claims 1 to 4 is formulated.

6. A rubber composition as set forth in claim 5, wherein a silane coupling agent is further formulated in an amount of 1 to 10 wt% based on the amount of the filler for rubber reinforcement formulated.

7. A rubber composition for a tire characterized by comprising 100 parts by weight of at least one rubber component containing a diene component in which 10 to 200 parts by weight of a filler for rubber reinforcement according to any one of claims 1 to 4 is formulated.

8. A rubber composition for a tire as set forth in claim 7, wherein a silane coupling agent is further formulated in an amount of 1 to 10 wt% based on the amount of the filler for rubber reinforcement formulated.

## INTERNATIONAL SEARCH REPORT

| International application No. |
|---|
| PCT/JP97/04233 |

**A. CLASSIFICATION OF SUBJECT MATTER**

Int. Cl$^6$ C08K9/06, C08K13/06, C08L9/00

According to International Patent Classification (IPC) or to both national classification and IPC

**B. FIELDS SEARCHED**

Minimum documentation searched (classification system followed by classification symbols)

Int. Cl$^6$ C08K9/06, C08K13/06, C08L9/00

Documentation searched other than minimum documentation to the extent that such documents are included in the fields searched

Electronic data base consulted during the international search (name of data base and, where practicable, search terms used)

WPI/L

**C. DOCUMENTS CONSIDERED TO BE RELEVANT**

| Category* | Citation of document, with indication, where appropriate, of the relevant passages | Relevant to claim No. |
|---|---|---|
| X | JP, 8-259739, A (The Goodyear Tire & Rubber Co.), October 8, 1996 (08. 10. 96), Claims & EP, 732362, A1 | 1 - 8 |

☐ Further documents are listed in the continuation of Box C.     ☐ See patent family annex.

| | |
|---|---|
| *　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier document but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | |
| | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
|---|---|
| February 3, 1998 (03. 02. 98) | February 10, 1998 (10. 02. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)

11